# EUROPEAN PATENT APPLICATION

(11) **EP 3 789 415 A1**
(43) Date of publication of application: **10.03.2021**
(21) Application number: 19382754.0
(22) Date of filing: 04.09.2019
(51) Int. Cl.: C08G 18/00, B33Y 70/00, B33Y 80/00, C08G 18/38, C08G 18/79

(54) **THIOL-ISOCYANATE-EPOXIDE FORMULATIONS FOR ADDITIVE MANUFACTURING**

(71) Applicant: Henkel AG & Co. KGaA, 40589 Düsseldorf (DE)
(72) Inventor: Zuniga Ruiz, Camilo, 08193 Bellaterra, Barcelona (ES); Belmez Lledo, Alejandro, 08291 Ripollet, Bacelona (ES); Chou, Kang Wei, 08290 Cerdanyola del Vallès (ES)

(57) **Abstract**

The present invention refers to a photocurable composition comprising at least one polythiol having at least two thiol groups, at least one polyisocyanate having at least two isocyanate groups, at least one epoxy compound having at least one epoxy group, and at least one photolatent base catalyst. Furthermore, the present invention pertains to a method of photo-curing the photo-curable composition according to the present invention as well as to a method of three dimensional printing an object with the photocurable composition according to the present invention. Moreover, the present invention refers to a cross-linked polymer or a three-dimensional object obtained by the methods according to the present invention, and use of the polymer or the object as an antireflective coating, encapsulant for LEDs, microlense for CMOS image sensors, as optical material, as biomedical functional coating, packaging and textile, stents, scaffolds, dental applications, and as reversible adhesive for debond on demand applications.

## Description

The present invention refers to a photo-curable composition comprising at least one polythiol having at least two thiol groups, at least one polyisocyanate having at least two isocyanate groups, at least one epoxy compound having at least one epoxy group, and at least one photolatent base catalyst. Furthermore, the present invention pertains to a method of photo-curing the photo-curable composition according to the present invention as well as to a method of three dimensional printing an object with the photo-curable composition according to the present invention. Moreover, the present invention refers to a cross-linked polymer or a three-dimensional object obtained by the methods according to the present invention, and use of the polymer or the object as an antireflective coating, encapsulant for LEDs, microlense for CMOS image sensors, as optical material, as biomedical functional coating, packaging and textile, stents, scaffolds, dental applications and reversible adhesive for debond on demand applications.

Additive manufacturing (or three dimensional (3D) printing) is now emerging as an appealing way to produce end-use parts. Although, the technology has been known since the late 80's the amount of materials that can be printed is quite limited. In fact, for light-based 3D printing technologies only acrylate- and epoxy-based resins are available in the market. For that reason, there is a need for new chemistries that can be applicable to light-based 3D printing technologies.

Thiol-based chemistry is in general very interesting in polymer science due to its efficiency and versatility to react with many monomers. Reaction of thiols can proceed under a variety of conditions, being of interest for additive manufacturing by UV light irradiation in the presence of a photolatent base and/or a photoinitiator.

3D printing is continuously growing and expanding with reference to applications and markets. The development of highly functional materials has become essential for optical applications. Precisely, polymeric materials possessing high refractive indices (high-n) and high Abbe's numbers (high-v) have received much attention because of the wide variety of applications such as optical materials including antireflective coatings, encapsulants for LEDs, microlenses for CMOS image sensors, among others. One clear benefit that 3D printing may bring to optical devices is the high degree of customization. Thus, for example, optical devices could be 3D printed in the exact shape as required for the customer, being even more affordable than conventional manufacturing processes.

The object of the present invention was the provision of thiol and isocyanate based compositions which are suitable for stereolithography (SLA) and digital light processing (DLP) 3D printing technologies.

The object was solved by a photo-curable composition comprising at least one polythiol having at least two thiol groups, at least one polyisocyanate having at least two isocyanate groups, at least one epoxy compound having at least one epoxy group, and at least one photolatent base catalyst.

The inventors of the present invention have surprisingly found that the photocurable cross-linked materials described in this invention display good optical properties such as high refractive index, Abbe's number and high transparency which make them suitable for multiple optical application including for example antireflective coatings, encapsulants for LEDs, microlenses for CMOS image sensors, and as optical materials in many devices. Furthermore, they display a short curing time, long pot-life, and shape memory behavior. Additionally, the photocurable compositions are non-toxic or non-hazardous.

Surprisingly, the cross-linked materials described in this invention display shape memory behavior. Not to be bound by any theory, the shape memory behavior is based on the 3D cross-linked polymer network, which acts as a rigid phase and is responsible for remembering the original shape and the strong hydrogen bonding between the polymeric chains, which act as the soft phase and is responsible for fixing the temporary shape. The soft phase can be deformed when the material is above the Tg and if the material is cooled down while keeping the deformation new H bonding occurs, which results in the fixation of the temporary shape. In a typical shape memory cycle, the polymer is heated up above the transition temperature (Tₜᵣₐₙₛ) which can be the glass transition temperature (Tg). Afterwards, the material is deformed and cooled down below the Tₜᵣₐₙₛ while maintaining the deformation to fix the temporary shape. When the polymer is heated again to a temperature above the Tₜᵣₐₙₛ, it is able to recover its original shape. Hence, for most of the shape memory applications, the transition temperature is desirable to be above room temperature. The photocurable cross-linked compositions developed in this invention can be used as shape memory polymers in diverse fields such as biomedical, functional coatings, packaging and textile. Specifically, within the biomedical field, they can be used as stents, scaffolds and for dental applications. Additionally, the photocurable cross-linked compositions developed in this invention can be used as reversible adhesives in diverse fields for debond on demand applications.

"One or more", as used herein, relates to "at least one" and comprises 1, 2, 3, 4, 5, 6, 7, 8, 9 or more of the referenced species. Similarly, "at least one" means "one or more", i.e. 1, 2, 3, 4, 5, 6, 7, 8, 9 or more. "At least one", as used herein in relation to any component, refers to the number of chemically different atoms or molecules, i.e. to the number of different types of the referenced species, but not to the total number of atoms or molecules. For example, "at least one photolatent base catalyst" means that at least one type of photolatent base catalyst falling within the definition can be part of the composition, but that also two or more different types of photolatent base catalysts falling within this definition can be present, but does not mean that several compounds of only one type of photolatent base catalyst may be present.

Numeric values specified without decimal places refer to the full value specified with one decimal place. For example, "99 %" means "99.0 %", if not stated otherwise.

The expressions "approx." or "about", in conjunction with a numerical value, refer to a variance of ± 10 % relative to the given numerical value, preferably ± 5 %, more preferably ± 1 %, if not explicitly stated otherwise.

All percentages given herein in relation to the compositions relate to weight-% (wt.-%) relative to the total weight of the respective composition, if not explicitly stated otherwise.

The expression "essentially free of" means that the respective compound can be contained in the composition in principle, but then be present in a quantity that does not interfere with a function of the other components. In the context of the present invention, therefore, the property "essentially free of" a particular compound is preferably considered to be a total weight of less than 0.1 wt.-%, more preferably less than 0.001 wt.-%, in particular free (i.e. below detection limit) of this particular compound, based on the total weight of the composition.

Numeric ranges specified in the format "in/from x to y" include the values specified. If several preferred numeric ranges are specified in this format, it goes without saying that all ranges resulting from the combination of the different endpoints will also be included.

Molecular weight data refer to the number average molecular weight (Mₙ) in g/mol, unless the weight-average molecular weight is explicitly mentioned. It is preferably determined by GPC using polystyrene standards.

These and other aspects, features, embodiments, and advantages of the invention become apparent to the skilled person in the following detailed description and claims. Each feature or embodiment from one aspect of the invention can be used in any other aspect of the invention. Additionally, each feature of the composition, method or use can be combined with any other feature or embodiment of the composition, method or use. Furthermore, the examples contained herein are intended to describe and illustrate the invention, but do not restrict it and in particular, the invention is not limited to these examples.

In a first aspect, the present invention refers to a photo-curable composition, comprising
A) at least one polythiol having at least two thiol groups;
B) at least one polyisocyanate having at least two isocyanate groups;
C) at least one epoxy compound having at least one epoxy group;
D) at least one photolatent base catalyst; and
E) optionally at least one additive.

In a second aspect, the present invention pertains to a method of photo-curing the photo-curable composition according to the present invention, comprising the steps:
i) providing the photo-curable composition by
   i.a) mixing the components A) to D) and optionally E) or
   i.b) mixing A), D) and optionally E) and separately mixing B) and C) before mixing the mixture containing A), D) and optionally E) and the mixture containing B) and C);
ii) transferring the photo-curable composition of step i) to a mould;
iii) exposing the photo-curable composition to UV-light to obtain a cross-linked polymer; and
iv) optionally post-curing the obtained polymer by thermal or UV treatment.

In a third aspect, the present invention refers to a method of three dimensional printing an object with the photo-curable composition according to the present invention, comprising the steps:
i) providing the photo-curable composition;
ii) forming a layer of the photo-curable composition with a three dimensional printer;
iii) exposing the layer under a suitable light source following a pattern of cross-sectional layer of the model to cure the layer;
iv) providing a further layer of the photo-curable composition with the three dimensional printer upon the cured layer obtained after step iii);
v) exposing the layer of step iv) under a suitable light source following a pattern of cross-sectional layer of the model in order to cure the layer and bond with the layer of step iii); and
vi) optionally repeating steps iv) and v) until the three-dimensional object is obtained.

In a fourth aspect, the present invention pertains to a cross-linked polymer obtained by the method according to the second aspect.

In a fifth aspect, the present invention refers to a three-dimensional object obtained by the method according to the third aspect.

Finally, in a sixth aspect, the present invention refers to the use of the cross-linked polymer according to the present invention or the three-dimensional object according to the present invention as antireflective coating, encapsulant for LEDs, microlense for CMOS image sensors, as optical material, as biomedical functional coating, packaging and textile, stents, scaffolds, dental applications, and as reversible adhesive for debond on demand applications.
The photo-curable composition of the present invention comprises, essentially consists or consist of
A) at least one polythiol having at least two thiol groups;
B) at least one polyisocyanate having at least two isocyanate groups;
C) at least one epoxy compound having at least one epoxy group;
D) at least one photolatent base catalyst; and
E) optionally at least one additive.

In various embodiments, the at least one polythiol (A) has two to six thiol groups, preferably two to four thiol groups, more preferably three to four thiol groups. Any polythiol is generally suitable, as long it contains at least two thiol groups.

In various embodiments the at least one polythiol is selected from primary and secondary aliphatic and oligomeric thiols having a molecular weight up to 5,000 g/mol, preferably up to 2,500 g/mol. Furthermore, the lower limit is preferably 90 g/mol.

In various embodiments, the at least one polythiol is selected from di-pentaerythritol tetra(3-mercapto-propionate), pentaerythritol tetra(3-mercaptopropionate), trimethylol-propane tris(3-mercaptopropionate), glycol di(3-mercaptopropionate), pentaerythritol tetramercaptoacetate, trimethylol-propane trimercaptoacetate, glycol dimercaptoacetate, ethoxylated trimethylolpropane tri(3-mercaptopropionate), propylene glycol-2,4,6-triallyloxy-1,3,5-triazine 3-mercaptopropionate, tris[2-(3-mercaptopropionyloxy)ethyl]isocyanurate, polycaprolactone tetra 3-mercaptopropionate, pentaerythritol tetrakis(3-mercaptobutylate), 1,4-bis(3-mercaptobutylyloxy)butane, 1,3,5-tris(3-mercaptobutyloxethyl)-1,3,5-triazine-2,4,6(IH,3H,5H)-trione, trimethylolpropane tris(3-mercarptobutyrate) or mixtures thereof; preferably from pentaerythritol tetra(3-mercaptopropionate), di-pentaerythritol tetra(3-mercaptopropionate), tris[2-(3-mercaptopropionyloxy)ethyl]isocyanurate, trimethylol-propane tris(3-mercaptopropionate, pentaerythritol tetrakis(3-mercaptobutylate), 1,3,5-tris(3-mercaptobutyloxethyl)-1,3,5-triazine-2,4,6(IH,3H,5H)-trione or mixtures thereof.

In various embodiments, the at least one polyisocyanate (B) has two to six isocyanate groups, preferably two to four isocyanate groups, more preferably two or three isocyanate groups. Any polyisocyanate is in general suitable, as long it contains at least two isocyanate groups.

In various embodiments, the at least one polyisocyanate has number average molecular weight of 500 to 25,000 g/mol, preferably 1,000 to 10,000 g/mol.

In various embodiments, the at least one polyisocyanate comprises 1,3,5-tris(6-isocyanatohexyl)-1,3,5-triazinane-2,4,6-trione, (E)-3,5-bis(6-isocyanatohexyl)-6-((6-isocyanatohexyl)imino)-1,3,5-oxadiazinane-2,4-dione or a mixture thereof. Suitable polyisocyanates are for example commercially available from Covestro AG under the trademark Desmodur®, whereby Desmodur® N3600 is preferred.

The photo-curable compositions require at least one epoxy compound (C), which has at least one epoxy group. In general, all epoxy compounds are suitable, which are known to the skilled person in the field of photo-curable compositions. In various embodiments, the at least one epoxy compound has one to five, preferably two to four, more preferably two epoxy groups.

In various embodiments, the at least one epoxy compound is an aliphatic or aromatic compound with a molecular weight of up to 5,000 g/mol, preferably 2,500 g/mol, more preferably 1,000 g/mol.

In various embodiments, the at least one epoxy compound is selected from 1,4-cyclohexane dimethanol diglycidyl ether, dipropylene glycol diglycidyl ether, ethylene glycol diglycidyl ether, trimethylolpropane triglycidyl ether, trimethylol ethane triglycidyl ether, propoxylated glycol triglycidyl ether, neopentyl glycol diglycidyl ether, 1,4-butanediol diglycidyl ether, polypropylene glycol diglycidyl ether or mixtures thereof, preferably from ethylene glycol diglycidyl ether, trimethylol ethane triglycidyl ether, 1,4-cyclohexane dimethanol diglycidyl ether or mixtures thereof.

In various embodiments, the thiol groups : NCO groups : epoxy groups are present in an equivalent (molar) ratio of 0.7 : 0.05 : 1.3 to 1.3 : 1.3 : 0.05, preferably 0.9 : 0.6 : 0.4 to 1.1 : 0.9 : 0.1 in the composition.

The photo-curable composition according to the present invention further contains at least one photolatent base catalyst (D).

In various embodiments, the at least one photolatent base catalyst is present in 0.01 to 5 wt.-%, preferably 0.05 to 2 wt.-%, based on the total weight of the composition.

In various embodiments, the at least one photolatent base catalyst is selected from 1,8-diazabicyclo[5.4.0]undec-7-ene-anthracene-tetraphenyl borate, 1,5,7-triazabicyclo[4.4.0]dec-5-ene hydrogen tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 1-(anthracen-9-ylmethyl)-2,3,4,6,7,8,9,10-octahydropyrimido[1,2-a]azepin-1-ium tetraphenyl borate, 1-(anthracen-9-ylmethyl)-9-ethyl-3,4,6,7,8,9-hexahydro-2H-pyrimido[1,2-a]pyrimidin-1-ium tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 2,3,4,6,7,8-hexahydropyrrolo[1,2-a]pyrimidin-1-ium tetraphenylborate, 1-(anthracen-9-ylmethyl)-2,3,4,6,7,8-hexahydropyrrolo[1,2-a]pyrimidin-1-ium tetraphenylborate, 3-(anthracen-9-ylmethyl)-1-methyl-1H-imidazol-3-ium tetraphenylborate, 3,4,6,7,8,9-hexahydro-2H-pyrimido[1,2-a]pyrimidin-1-ium tetraphenylborate, 1,2-dicyclohexyl-4,4,5,5-tetramethylbiguanidium n-butyltriphenylborate, (Z)-([Bis(dimethylamino)methylidene]amino)-N-cyclohexyl(cyclohexylamino)methaniminiumtetrakis(3-fluorophenyl)borate or mixtures thereof; preferably from 1,8-diazabicyclo[5.4.0]undec-7-ene-anthracene-tetraphenyl borate, 1,5,7-triazabicyclo[4.4.0]dec-5-ene hydrogen tetraphenyl borate, 1-(anthracen-9-ylmethyl)-2,3,4,6,7,8,9,10-octahydropyrimido[1,2-a]azepin-1-ium tetraphenyl borate, and 1-(anthracen-9-ylmethyl)-9-ethyl-3,4,6,7,8,9-hexahydro-2H-pyrimido[1,2-a]pyrimidin-1-ium tetraphenyl borate, 2,3,4,6,7,8-hexahydropyrrolo[1,2-a]pyrimidin-1-ium tetraphenylborate, 1-(anthracen-9-ylmethyl)-2,3,4,6,7,8-hexahydropyrrolo[1,2-a]pyrimidin-1-ium tetraphenylborate, 3-(anthracen-9-ylmethyl)-1-methyl-1H-imidazol-3-ium tetraphenylborate, 3,4,6,7,8,9-hexahydro-2H-pyrimido[1,2-a]pyrimidin-1-ium tetraphenylborate, 1,2-dicyclohexyl-4,4,5,5-tetramethylbiguanidium n-butyltriphenylborate, (Z)-([Bis(dimethylamino)methylidene]amino)-N-cyclohexyl(cyclohexylamino)methaniminiumtetrakis(3-fluorophenyl)borate or mixtures thereof.

In various embodiments, the at least one photolatent base catalyst is able to release a basic component, of which its protonated counterpart has a pKa of above 10.

The photo-curable composition of the present invention can additionally comprise at least one additive (E). Generally, all additives in the field of photo-curable compositions known to the skilled person are suitable.

In various embodiments, the at least one additive is present in up to 10 wt.-%, preferably 0.001 to 8 wt.-%, more preferably 0.05 to 5 wt.-%, most preferably 0.1 to 1 wt.-%, based on the total weight of the composition.

In various embodiments, the at least one additive comprises (E1) at least one inhibitor selected from acid boric esters or phosphoric acid esters, preferably selected from trialkyl borates and dialkyl phosphates, more preferably from triisopropyl borate, tributyl borate, triethyl borate, triphenyl borate and tri-tert-butyl borate, dibutyl phosphate, tris-(2-butoxyethyl) phosphate, triisobutyl phosphate and bis(2-ethylhexyl) phosphate, more preferably tributyl borate, dibutyl phosphate and bis(2-ethylhexyl) phosphate or mixtures thereof.

In various embodiments, the at least one additive comprises (E2) at least one compound selected from solvents, fillers, fire retardants, UV-stabilizer, pigments, dyes or mixtures thereof; preferably wherein the fillers are selected from carbon fibers and metal oxide nanoparticles.

In various embodiments, the at least one additive comprises (E3) at least one sensitizer, preferably in an amount of 0.01 to 4 wt. -%, more preferably from 0.05 to 2 wt.-%, preferably selected from 2-isopropylthioxanthone, 9,10-Diethoxyanthracene, 9,10-Dibutoxyanthracene, Vitamin K₁, 2-Ethyl-9,10-dimethoxyanthracene, 1-chloro-4-propoxythioxanthone or mixtures thereof.

In various embodiments, the photo-curable composition according to the present invention has a viscosity of 1 to 5,000 m*Pas, preferably 10 to 3,000 m*Pas measured with a AR2000 rheometer from TA instruments equipped with a Peltier plate and a 40mm parallel plate at 25°C in the shear stress range of 100-500 Pa.

The present invention as well refers to a method of photo-curing the photo-curable composition according to the present invention, comprising, consisting essentially or consisting of the steps:
i) providing the photo-curable composition by
   i.a) mixing the components A) to D) and optionally E) or
   i.b) mixing A), D) and optionally E) and separately mixing B) and C) before mixing the mixture containing A), D) and optionally E) and the mixture containing B) and C);
ii) transferring the photo-curable composition of step i) to a mould;
iii) exposing the photo-curable composition to UV-light to obtain a cross-linked polymer; and
iv) optionally post-curing the obtained polymer by thermal or UV treatment,
preferably by thermal treatment for 0.5 to 10 hours, more preferably 1 to 5 hours and/or preferably at 80 to 140°C, more preferably 100 to 120 °C or preferably by UV treatment using a lamp with a power lower than 500W, more preferably lower than 100W and/or preferably for less than 10 hours, more preferably for less than 2 hours.

A cross-linked polymer is obtainable using said methods and also forms part of the invention.

Furthermore, the present invention refers to a method of three dimensional printing an object with the photo-curable composition according to the present invention, comprising or consisting of the steps:
i) providing the photo-curable composition;
ii) forming a layer of the photo-curable composition with a three dimensional printer, preferably a SLA or DLP printer;
iii) exposing the layer under a suitable light source following a pattern of cross-sectional layer of the model to cure the layer;
iv) providing a further layer of the photo-curable composition with the three dimensional printer upon the cured layer obtained after step iii);
v) exposing the layer of step iv) under a suitable light source following a pattern of cross-sectional layer of the model in order to cure the layer and bond with the layer of step iii); and
vi) optionally repeating steps iv) and v) until the three-dimensional object is obtained.

Using said method, a three-dimensional object can be obtained.

The cross-linked polymer and the three-dimensional object according to the present invention have in various embodiment a glass transition temperature Tg of 0 to 200 °C, preferably 25 to 150 °C, more preferably 40 to 125 °C, measured according to ISO 11357-2:2014-07 or ASTM E1356-08(2014).

In further various embodiments, the cross-linked polymer and the three-dimensional object according to the present invention have a refractive index of 1.50 to 1.80, preferably 1.54 to 1.65, more preferably 1.58 to 1.60, measured with an Electronic Abbe Refractometer AR 2008 from A.Krüss Optronic at 21°C and at standard wavelength of 589 nm.

The cross-linked polymer and the three-dimensional object according to the present invention can be used as antireflective coating, encapsulant for LEDs, microlense for CMOS image sensors, as optical material, as biomedical functional coating, packaging and textile, stents, scaffolds, dental applications, and as reversible adhesive for debond on demand applications, preferably as reversible adhesive for debond on demand applications.

### Examples

### Glass transition temperature:

The Tg of the samples was determined using a DSC Q2000 equipped with a Refrigerated Cooling System 90, both from TA instruments. The DSC experiments comprised two cooling/heating cycles at a scanning rate of 10°C/min using N₂ as a purge gas. The Tg can be measured in accordance with ISO 11357-2:2014-07 or ASTM E1356-08(2014).

### Refractive index (n_{D}²¹):

The refractive index of the samples was measured using an Electronic Abbe Refractometer AR 2008 from A.Krüss Optronic. All measurements were performed at 21°C and at standard wavelength of 589 nm.

### Abbe's number (v_{D}²¹)

The Abbe's number of the samples was measured using a Metricon 2010/M Prism Coupler equipped with three lamps emitting at 402, 511 and 687 nm. All measurements were performed at 21°C and the value at λ=589 nm was interpolated by the software.

### Initial viscosity:

The initial viscosity of the formulations was measured using an AR2000 rheometer from TA instruments equipped with a Peltier plate and a 40mm parallel plate. The viscosity of the formulations was checked at 25°C in the shear stress range of 100-500 Pa.

### Pot-life:

The pot-life of the formulations is defined as the time during which the viscosity remains below the viscosity limit of 3000 m*Pas. The pot-life was checked by monitoring the viscosity over time as above described.

### Example 1 and Comparative example 1:

The SH:NCO:epoxy equivalent ratio was set at 1.1:0.9:0.1. 2.0221 g of tris(6-isocyanatohexyl)-1,3,5-triazinane-2,4,6-trione (Desmodur® N3600) are added to a mixture of 1.8316 g of dipentaerythritol hexa(3-mercaptopropionate) (Thiocure® DiPETMP) and 0.1463 g of ethylene glycol diglycidyl ether (Erisys® EGDGE). The mixture was mixed for 1 min at 3500 rpm and stored at room temperature. The formulation viscosity was checked over time with a rheometer. A formulation containing the same monomers but with a 1,8-diazabicyclo[5.4.0]undec-7-ene-anthracene-tetraphenyl borate (DBU-Ant-BPh4) as a photolatent base catalyst was UV cured. Firstly, 0.0020 g (0.05 wt.-%) of DBU-Ant-BPh4 were added to 1.8306 g of Thiocure® DiPETMP and mixed for 1 min at 3500 rpm. Afterwards, 2.0211 g of Desmodur N3600 and 0.1463 g of Erisys® EGDGE were added to the previous mixture and were mixed for 1 min at 3500 rpm (Example 1). The formulation was degassed under vacuum if there were bubbles present. Then the mixture was casted in the appropriate mould and placed in a UV curing chamber equipped with a Hg lamp. The mixture was irradiated 3 times for 10 seconds. The reaction conversion was monitored by the disappearance of the NCO peak (-2260 cm⁻¹) and the epoxy ring vibration peak (around 900 cm⁻¹) by ATR-FTIR. If the reaction was not completed upon UV light exposure the sample was thermally post-cured. The fully cured sample was characterized by DSC and refractometry.

For comparison, a formulation with a SH:NCO:epoxy equivalent ratio of 1.1:1.0:0.0 is prepared by adding 2.1901 g of tris(6-isocyanatohexyl)-1,3,5-triazinane-2,4,6-trione (Desmodur® N3600) to 1.8079 g of dipentaerythritol hexa(3-mercaptopropionate) (Thiocure® DiPETMP). The mixture was mixed for 1 min at 3500 rpm and stored at room temperature. The formulation viscosity was checked over time with a rheometer.
A formulation containing the same monomers but with a 1,8-diazabicyclo[5.4.0]undec-7-ene-Anthracene-Tetraphenyl borate (DBU-Ant-BPh4) as a photolatent base catalyst was UV cured. Firstly, 0.0020g (0.05 wt.-%) of DBU-Ant-BPh4 were added to 1.8079 g of Thiocure® DiPETMP and mixed for 1 min at 3500rpm. Afterwards, 2.1901 g of Desmodur® N3600 were added to the previous mixture and were mixed for 1 min at 3500 rpm. The formulation was degassed under vacuum if there were bubbles present. Then the formulation was casted in the appropriate mould and placed in a UV curing chamber equipped with a Hg lamp. The formulation was irradiated 3 times for 10 seconds. If the reaction was not completed upon UV light exposure the sample was thermally post-cured. The fully cured sample was characterized by DSC and refractometry (Comparative example 1).

| | SH:NCO:epoxy equivalent ratio | Initial η (cP) | Pot-life (h) | T_{g} (°C) | Refractive index (n_{D}²¹) | Abbe's number (v_{D}²¹) |
|---|---|---|---|---|---|---|
| Comp. Ex. 1 | 1.1:1:0 | 1157 | ∼8 | 70 | 1,548 | 43.7 |
| Ex. 1 | 1.1:0.9:0.1 | 1001 | ∼12 | 39 | 1,561 | 43.8 |

Comparative example is a binary formulation containing a multi-functional thiol and a multi-functional isocyanate which yields a viscous reactive formulation. In contrast, Example 1 is a ternary formulation containing three main components: a multi-functional thiol, a multi-functional isocyanate and a multi-functional epoxy monomer. This formulation is less viscous and less reactive as seen by the extension of the pot-life. Regarding the optical properties, the refractive index can be boosted as seen with Example 1 whereas the Abbe's number is not affected. Thus, the main improvement of compositions according to the present invention is the reduction of the viscosity and the extension of the pot-life. Additionally, other desired properties such as the refractive index can be improved as well.

## Claims

1. A photo-curable composition comprising
A) at least one polythiol having at least two thiol groups;
B) at least one polyisocyanate having at least two isocyanate groups;
C) at least one epoxy compound having at least one epoxy group;
D) at least one photolatent base catalyst; and
E) optionally at least one additive.

2. The photo-curable composition according to claim 1, wherein the at least one polythiol
i) has two to six thiol groups; and/or
ii) is selected from primary and secondary aliphatic and oligomeric thiols having a molecular weight up to 5,000 g/mol; and/or
iii) is selected from di-pentaerythritol tetra(3-mercapto-propionate), pentaerythritol tetra(3-mercaptopropionate), trimethylol-propane tris(3-mercaptopropionate), glycol di(3-mercaptopropionate), pentaerythritol tetramercaptoacetate, trimethylol-propane trimercaptoacetate, glycol dimercaptoacetate, ethoxylated trimethylolpropane tri(3-mercaptopropionate), propylene glycol-2,4,6-triallyloxy-1,3,5-triazine 3-mercaptopropionate, tris[2-(3-mercaptopropionyloxy)ethyl]isocyanurate, polycaprolactone tetra 3-mercaptopropionate, pentaerythritol tetrakis(3-mercaptobutylate), 1,4-bis(3-mercaptobutylyloxy)butane, 1,3,5-tris(3-mercaptobutyloxethyl)-1,3,5-triazine-2,4,6(IH,3H,5H)-trione, trimethylolpropane tris(3-mercarptobutyrate) or mixtures thereof.

3. The photo-curable composition according to claim 1 or 2, wherein the at least one polyisocyanate
i) has two to six isocyanate groups; and/or
ii) has a number average molecular weight of 500 to 25,000 g/mol; and/or
iii) comprises 1,3,5-tris(6-isocyanatohexyl)-1,3,5-triazinane-2,4,6-trione, (E)-3,5-bis(6-isocyanatohexyl)-6-((6-isocyanatohexyl)imino)-1,3,5-oxadiazinane-2,4-dione or a mixture thereof.

4. The photo-curable composition according to any of the preceding claims, wherein the at least one epoxy compound
i) has one to five epoxy groups; and/or
ii) is an aliphatic or aromatic compound with a molecular weight of up to 5,000 g/mol; and/or
iii) is selected from 1,4-cyclohexane dimethanol diglycidyl ether, dipropylene glycol diglycidyl ether, ethylene glycol diglycidyl ether, trimethylolpropane triglycidyl ether, trimethylol ethane triglycidyl ether, propoxylated glycol triglycidyl ether, neopentyl glycol diglycidyl ether, 1,4-butanediol diglycidyl ether, polypropylene glycol diglycidyl ether or mixtures thereof.

5. The photo-curable composition according to any of the preceding claims, wherein thiol groups : NCO groups : epoxy groups are present in an equivalent ratio of 0.7 : 0.05 : 1.3 to 1.3 : 1.3 : 0.05.

6. The photo-curable composition according to any of the preceding claims, wherein the at least one photolatent base catalyst
i) is present in 0.01 to 5 wt.-%, based on the total weight of the composition; and/or
ii) the at least one photolatent base catalyst is selected from 1,8-diazabicyclo[5.4.0]undec-7-ene-anthracene-tetraphenyl borate, 1,5,7-triazabicyclo[4.4.0]dec-5-ene hydrogen tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one, 1-(anthracen-9-ylmethyl)-2,3,4,6,7,8,9,10-octahydropyrimido[1,2-a]azepin-1-ium tetraphenyl borate, 1-(anthracen-9-ylmethyl)-9-ethyl-3,4,6,7,8,9-hexahydro-2H-pyrimido[1,2-a]pyrimidin-1-ium tetraphenyl borate, 2-benzyl-2-(dimethylamino)-1-(4-methoxyphenyl)butan-1-one, 2-benzyl-2-dimethylamino-4'-morpholinobutyrophenone, 2-dimethylamino-2-(4-methyl-benzyl)-1-(4-morpholin-4-yl-phenyl)-butan-1-one or mixtures thereof; and/or
iii) the photolatent base catalyst releases a basic component, of which its protonated counterpart has a pKa of above 10.

7. The photo-curable composition according to any of the preceding claims, wherein the at least one additive
i) is present in up to 10 wt.-%, based on the total weight of the composition; and/or
ii) comprises (E1) at least one inhibitor selected from acid boric esters or phosphoric acid esters, preferably selected from trialkyl borates and dialkyl phosphates, more preferably from triisopropyl borate, tributyl borate, triethyl borate, triphenyl borate and tri-tert-butyl borate, dibutyl phosphate, tris-(2-butoxyethyl) phos-phate, triisobutyl phosphate and bis(2-ethylhexyl) phosphate, more preferably tributyl borate, dibutyl phosphate and bis(2-ethylhexyl) phosphate; and/or
iii) comprises (E2) at least one compound selected from solvents, fillers, fire retardants, UV-stabilizer, pigments, dyes; and/or
iv) comprises (E3) at least one sensitizer.

8. The photo-curable composition according to any of the preceding claims, wherein the composition has a viscosity of 1 to 5,000 m*Pas measured with a AR2000 rheometer from TA instruments equipped with a Peltier plate and a 40mm parallel plate at 25°C in the shear stress range of 100 to 500 Pa

9. A method of photo-curing the photo-curable composition according to any of claims 1 to 8, comprising the steps:
i) providing the photo-curable composition by
i.a) mixing the components A) to D) and optionally E) or
i.b) mixing A), D) and optionally E) and separately mixing B) and C) before mixing the mixture containing A), D) and optionally E) and the mixture containing B) and C);
ii) transferring the photo-curable composition of step i) to a mould;
iii) exposing the photo-curable composition to UV-light to obtain a cross-linked polymer; and
iv) optionally post-curing the obtained polymer by thermal or UV treatment.

10. A method of three dimensional printing an object with the photo-curable composition according to any of claims 1 to 8, comprising or consisting of the steps:
i) providing the photo-curable composition;
ii) forming a layer of the photo-curable composition with a three dimensional printer;
iii) exposing the layer under a suitable light source following a pattern of cross-sectional layer of the model to cure the layer;
iv) providing a further layer of the photo-curable composition with the three dimensional printer upon the cured layer obtained after step iii);
v) exposing the layer of step iv) under a suitable light source following a pattern of cross-sectional layer of the model in order to cure the layer and bond with the layer of step iii); and
vi) optionally repeating steps iv) and v) until the three-dimensional object is obtained.

11. A cross-linked polymer obtained by the method according to claim 9.

12. A three-dimensional object obtained by the method according to claim 10.

13. The cross-linked polymer according to claim 11 or the three-dimensional object according to clam 12, having
i) a glass transition temperature Tg of 0 to 200 °C, measured according to 11357-2:2014-07 or ASTM E1356-08 (2014); and/or
ii) a refractive index of 1.50 to 1.80, measured with an Electronic Abbe Refractometer AR 2008 from A.Krüss Optronic at 21 °C and at standard wavelength of 589 nm.

14. Use of the cross-linked polymer according to claim 11 or 13 or the three-dimensional object according to claim 12 or 13 as antireflective coating, encapsulant for LEDs, microlense for CMOS image sensors, as optical material, as biomedical functional coating, packaging and textile, stents, scaffolds, dental applications, and as reversible adhesive for debond on demand applications.
